# EUROPÄISCHE PATENTSCHRIFT

(11) **EP 1 994 301 B1**
(45) Veröffentlichungstag und Bekanntmachung des Hinweises auf die Patenterteilung: **26.08.2009**
(21) Anmeldenummer: 07711625.9
(22) Anmeldetag: 22.02.2007
(51) Int. Cl.: F16D 65/092

(54) **SCHEIBENBREMSE**
DISK BRAKE
FREIN A DISQUE

(30) Priorität: 06.03.2006 DE 102006010215
(43) Veröffentlichungstag der Anmeldung: 26.11.2008
(73) Patentinhaber: KNORR-BREMSE Systeme für Nutzfahrzeuge GmbH, 80809 München (DE)
(72) Erfinder: BAUMGARTNER, Johann, 85368 Moosburg (DE); LINKE, Tobias, 81827 München (DE)
(74) Vertreter: Schönmann, Kurt
(86) Internationale Anmeldenummer: PCT/EP2007/001534
(87) Internationale Veröffentlichungsnummer: WO 2007/101555

(56) Entgegenhaltungen:
- EP-A1- 1 217 246
- WO-A-20/05003584
- DE-A1- 19 706 123
- US-A- 5 433 301

## Beschreibung

Die Erfindung bezieht sich auf eine Scheibenbremse, vorzugsweise auf eine druckluftbetätigte Scheibenbremse für Nutzfahrzeuge, mit einem eine Bremsscheibe umfassenden Bremssattel, mit beidseitig der Bremsscheibe angeordneten, an Bremsbelagträgerplatten festgelegten Bremsbelägen, mit einem rollengelagerten Bremshebel, mit einer seitlich neben der Bremsscheibe montierten Zuspanneinrichtung, die mit mindestens zwei quer zur Bremsscheibe stehenden, in einer Brücke geführten Druckstempel ausgerüstet ist, deren der zugewandten Bremsbelagträgerplatte zugeordnete Stirnflächen diese kontaktieren.

Die in Rede stehende Scheibenbremse ist ferner mit einem Bremszylinder ausgestattet, der bei einem Bremsvorgang eine Kraft auf den Bremshebel überträgt. In der Brücke sind Gewindespindeln geführt, die an ihren der Bremsscheibe zugeordneten Enden die Druckstempel tragen. Durch diese Gewindespindeln wird das Lüftspiel der Bremse eingestellt, so dass der Verschleiß der Bremsbeläge kompensiert wird.

Bei der in Rede stehenden Scheibenbremse hat es sich als vorteilhaft erwiesen, wenn die Stempel bei einem Bremsvorgang mit möglichst hoher Reibkraft an der zugewandten Fläche der Belagträgerplatte anliegen, da dann Umfangskräfte aufgenommen werden, wodurch die Brücke durch diese Kontakte der Druckstempel mit den zugewandten Flächen der Bremsbelagträgerplatten von Biegebeanspruchungen entlastet wird. Diese Entlastung ist jedoch aufgrund der glattflächigen Kontaktflächen relativ gering, so dass die erzielte Verringerung der Biegebeanspruchungen der Brücke vernachlässigt werden kann.

Aus der DE-A- 197 06 123 geht ein Bremsbelag hervor, wobei die Bremsbelagträgerplatte ein Wellenprofil aufweist.

Der Erfindung liegt die Aufgabe zugrunde, eine Scheibenbremse der eingangs näher beschriebenen Art so zu gestalten, dass beim Bremsvorgang die auf die Brücke einwirkenden Biegekräfte deutlich verringert werden, wobei jedoch sichergestellt sein soll, dass der Bremsbelag sich am Bremsbelagträgerplattenhorn abstützt, bedingt durch die einwirkenden Umfangskräfte.

Die gestellte Aufgabe wird gelöst, indem die Stirnflächen der Druckstempel und zumindest die Kontaktflächen der zugewandten Bremsbelagträgerplatte derart mit formschlüssig ineinander greifenden Profilierungen versehen sind, dass zumindest bei einer Volllastbremsung jeder Bremsbelag in Umfangsrichtung verschiebbar ist. Die Profilierungen könnten auch als Rampen bezeichnet werden. Die Profilierungen der Stirnflächen der Druckstempel und die Profilierungen der zugewandten Fläche der Bremsbelagträgerplatte sind komplementär gestaltet. Darüber hinaus sind sie hinsichtlich der Ausrichtung und der Steigung so bemessen, dass Umfangskräfte in einem gewünschten Maße von den Stempeln aufgenommen werden, dass die Umfangsverschiebung jedes Bremsbelages noch so groß ist, das dieser am Bremsbelagträgerplattenhorn anliegt. Die Profilierungen sind außerdem so ausgelegt, dass die maximal von den Druckstempeln aufzunehmende Umfangskraft begrenzt ist. Durch die erfindungsgemäße Lösung wird außerdem noch erreicht, dass durch die Umfangsverschiebung des Bremsbelages in den Profilierungen bzw. in den Rampen eine Zustellbewegung des Bremsbelages in seiner Betätigungsrichtung ausgeführt wird. Auf diese Weise wird in begrenztem Maße ein Selbstverstärkungseffekt genutzt, wodurch ein Teil der Aufweitung des Bremssattels kompensiert wird.

Damit es nicht zu Klappergeräuschen und dergleichen kommt, ist vorgesehen, dass die Stirnflächen der Druckstempel und die Kontaktflächen der zugewandten Bremsbelagträgerplatte spielfrei ineinander greifen. Dabei ist es besonders vorteilhaft, auch im Hinblick auf eine exakte Fertigung, wenn die ineinander greifenden Profilierungen geometrisch definierbar sind. So ist in bevorzugter Ausführung vorgesehen, dass die Profilierungen der Stirnflächen der Druckstempel und die Profilierungen der entsprechenden Bereiche der zugewandten Fläche der Bremsbelagträgerplatte aus Nuten und in die Nuten eingreifenden Stegen bestehen, die zueinander im ständigen Wechsel angeordnet sind.

So ist vorgesehen, dass die Nuten in den Querschnitten dreieckförmig ausgebildet sind. Dabei können die Querschnitte dann gleichmäßig oder ungleichmäßig sein. Die exakte Gestaltung richtet sich nach dem Reibwert des Bremsbelages. Die Schrägungswinkel können je nach dem Reibwert des Bremsbelages zwischen 15° und 40° liegen. In vorteilhafter Weise liegen diese Winkel zwischen 20° und 30°, sofern man einen Reibwert des Bremsbelages von 0,375 zugrunde legt.

Die Scheibenbremse ist zweckmäßigerweise so ausgelegt, dass vorzugsweise der mögliche Verschiebeweg des Bremsbelages in Umfangsrichtung begrenzt wird, so dass der über die Profilierungen erzielte Zustellweg des Bremsbelages maximal den Betrag des Lüftspieles annehmen kann. Auf diese Weise wird sichergestellt, dass unabhängig von den Reibungsverhältnissen an dem Bremsbelag und den Profilierungen die Bremse einwandfrei lösbar ist.

Anhand der beiliegenden Zeichnung wird die Erfindung noch näher erläutert.

### Es zeigt:

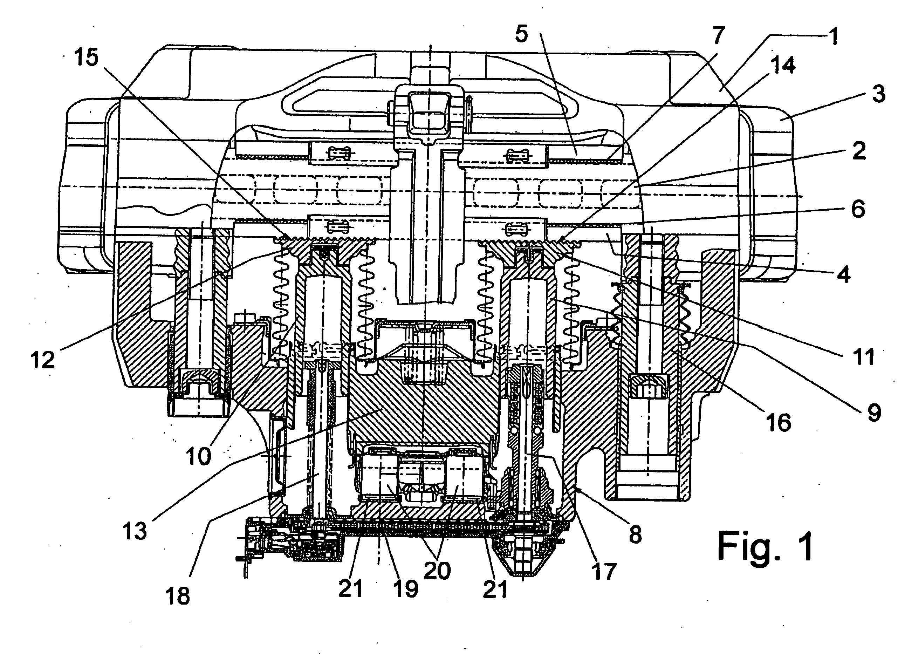

- Figur 1: eine erfindungsgemäße Scheibenbremse, teilweise geschnitten, jedoch ohne Bremszylinder.

Die in der Figur 1 dargestellte Scheibenbremse ist mit einem Bremssattel 1 ausgestattet, der eine Bremsscheibe 2 umfasst. Die Scheibenbremse ist außerdem noch mit einem Bremsträger 3 ausgerüstet. Beidseitig der Bremsscheibe 2 sind Bremsbelagträgerplatten 4, 5 angeordnet. An den Bremsbelagträgerplatten 4, 5 sind an der der Bremsscheibe 2 zugewandten Seite die Bremsbeläge 6, 7 festgelegt. Die Scheibenbremse ist ferner mit einer Zuspanneinrichtung 8 ausgestattet, die an sich bekannt ist und zum Ausgleich des Verschleißes der Bremsbeläge 6, 7 dient. Diese Zuspanneinrichtung 8 ist im dargestellten Ausführungsbeispiel mit zwei um einen Winkel von 180° zueinander im Versatz stehenden Gewindespindeln 9, 10 ausgestattet. Auf die der Bremsscheibe 2 zugewandt liegenden Enden sind Druckstempel 11, 12 aufgesetzt. Während die Gewindespindeln 9, 10 zum Nachstellen der Bremsbeläge 6, 7 drehbar sind, sind die Stempel 11, 12 ausschließlich in Längsachsrichtung der Gewindespindeln 9, 10 verfahrbar bzw. die Gewindespindeln 9, 10 können eine Drehbewegung relativ zu den Druckstempeln 11, 12 ausführen. Die Gewindespindeln 9, 10 sind in einer Brücke 13 eingesetzt.

Wie die Figur 1 zeigt, sind die Kontaktflächen der Stempel 11, 12 und die der zugewandten Bremsbelagträgerplatte 4 profiliert, so dass sie formschlüssig ineinander greifen. Im dargestellten Ausführungsbeispiel bestehen die Profilierungen 14, 15 aus im Querschnitt dreieckförmigen Nuten und Stegen, die im ständigen Wechsel zueinander angeordnet sind. Die Profilierungen 14, 15 sind so ausgeführt, dass sie spielfrei ineinander greifen. Im dargestellten Ausführungsbeispiel stehen die Flanken der Profilierungen im gleichen Winkel zu der nicht profilierten Fläche der Bremsbelagträgerplatte 4. Im Gegensatz zu der dargestellten Ausführung könnte auch dieser Flankenwinkel bzw. der Rampenwinkel unter einem Winkel zwischen 15° und 40° zu der restlichen Fläche der Bremsbelagträgerplatte 4 stehen. Optimal liegt dieser besagte Winkel zwischen 20 und 30°, jedoch unter der Voraussetzung, dass der Reibwert des Bremsbelages 6 im Bereich von 0,375 liegt. Durch die Profilierungen 14, 15 werden Biegebelastungen auf die Brücke 13 zumindest bei einer Volllastbremsung wesentlich herabgesetzt. Dies ist darauf zurückzuführen, dass von den Druckstempeln 11, 12 Umfangskräfte aufgenommen werden können.

Die Bremse ist außerdem noch mit einer Lagerung 16 für den Bremssattel 1 ausgerüstet. Die Zuspanneinrichtung 8 ist noch mit einem Nachsteller 17, einem Mitnehmer 18 sowie einer Kette 19 ausgestattet. Der Bremshebel ist durch das Bezugszeichen 20 gekennzeichnet, wobei aus der Figur 1 hervorgeht, dass er mittels Rollen 21 gelagert ist. Auf den Bremshebel 20 wirkt in nicht dargestellter Weise der Bremszylinder, sofern ein Bremsvorgang ausgelöst wird.

Die Erfindung ist nicht auf das dargestellte Ausführungsbeispiel beschränkt. Wesentlich ist, dass die einander zugewandt liegenden Flächen einer Bremsbelagträgerplatte 4 mit den Flächen der Druckstempel 11, 12 formschlüssig bzw. schließend ineinander greifen, so dass die Stempel 11, 12 Umfangskräfte aufnehmen können.

## Patentansprüche

1. Scheibenbremse, vorzugsweise druckluftbetätigte Scheibenbremse für Nutzfahrzeuge
- mit einem eine Bremsscheibe (2) umfassenden Bremssattel (1),
- mit beidseitig der Bremsscheibe (2) angeordneten, an Bremsbelagträgerplatten (4, 5) festgelegten Bremsbelägen (6, 7),
- mit einem rollengelagerten Bremshebel (20),
- mit einer seitlich neben der Bremsscheibe (2) montierten Zuspanneinrichtung (8),
- die mit mindestens zwei quer zur Bremsscheibe (2) stehenden, in einer Brücke (13) geführten Druckstempel (11, 12) ausgerüstet ist,
- deren der zugewandten Bremsbelagträgerplatte (4) zugeordnete Stirnflächen diese kontaktieren,
**dadurch gekennzeichnet, dass**
- die Stirnflächen der Druckstempel (11, 12) und zumindest die Kontaktflächen der zugewandten Bremsbelagträgerplatte (4) derart mit formschlüssig ineinander greifenden Profilierungen versehen sind,
- dass zumindest bei einer Volllastbremsung jeder Bremsbelag (6) in Umfangsrichtung verschiebbar ist.

2. Scheibenbremse nach Anspruch 1, **dadurch gekennzeichnet, dass** die Profilierungen (14, 15) der Bremsbelagträgerplatte (4) und der beiden Stempel (11, 12) spielfrei ineinander greifbar sowie geometrisch definierbar sind.

3. Scheibenbremse nach Anspruch 1 oder 2, **dadurch gekennzeichnet, dass** die Profilierungen (14, 15) der Bremsbelagträgerplatte (4) und der Stempel (11, 12) aus Nuten und darin eingreifenden Stegen bestehen, die zueinander im ständigen Wechsel angeordnet sind.

4. Scheibenbremse nach Anspruch 3, **dadurch gekennzeichnet, dass** die Nuten und Stege der Profilierungen (14, 15) in den Querschnitten dreieckförmig ausgebildet sind.

5. Scheibenbremse nach Anspruch 3 oder 4, **dadurch gekennzeichnet, dass** der Schrägungs- bzw. Rampenwinkel unter einem Winkel zwischen 15 und 40° zu der die Profilierungen aufweisenden Fläche der Bremsbelagträgerplatte (4) stehen.

6. Scheibenbremse nach Anspruch 5, **dadurch gekennzeichnet, dass** der Reibwert des Bremsbelages (6) im Bereich von 0,375 liegt, und dass der Schrägungs- bzw. der Rampenwinkel der Profilierungen (14, 15) unter einem Winkel zwischen 20 und 30° zu der die Profilierungen aufweisenden Fläche der Belagträgerplatte (4) stehen.

7. Scheibenbremse nach einem oder mehreren der vorhergehenden Ansprüche 1 - 6, **dadurch gekennzeichnet, dass** der über die Profilierungen (14, 15) erzielbare Zustellweg des Bremsbelages (6) nicht größer ist als der Betrag des Lüftspieles der Scheibenbremse.

## Claims

1. A disk brake, preferably a pneumatically actuated disk brake for utility vehicles, having
- a brake caliper (1) enclosing a brake disk (2),
- brake linings (6, 7) fixed to brake lining carrier plates (4, 5) and arranged on both sides of the brake disk (2),
- a roller-mounted brake lever (20), and
- an application device (8), which is fitted laterally beside the brake disk (2)
- and which is equipped with at least two pistons (11, 12) situated transversely in relation to the brake disk (2) and carried in a bridge (13),
- the end faces of said pistons assigned to the opposing brake lining carrier plate (4) coming into contact with the latter,
**characterized in that**
- the end faces of the pistons (11, 12) and at least the contact faces of the opposing brake lining carrier plate (4) are provided with positively intermeshing profiles, in such a way
- that each brake lining (6) is displaceable in a peripheral direction, at least in full-load braking.

2. The disk brake as claimed in claim 1, **characterized in that** the profiles (14, 15) of the brake lining carrier plate (4) and the two pistons (11, 12) can intermesh without any play and can be geometrically defined.

3. The disk brake as claimed in claim 1 or 2, **characterized in that** the profiles (14, 15) of the brake lining carrier plate (4) and of the pistons (11, 12) consist of grooves and lands engaging therein, which are arranged constantly alternating with one another.

4. The disk brake as claimed in claim 3, **characterized in that** the grooves and the lands of the profiles (14, 15) are of triangular cross sectional design.

5. The disk brake as claimed in claim 3 or 4, **characterized in that** the angles of inclination or ramp angles stand at an angle of between 15° and 40° to the face of the brake lining carrier plate (4) having the profiles.

6. The disk brake as claimed in claim 5, **characterized in that** the coefficient of friction of the brake lining (6) is in the order of 0.375, and **in that** the angles of inclination or ramp angles of the profiles (14, 15) stand at an angle of between 20° and 30° to the face of the brake lining carrier plate (4) having the profiles.

7. The disk brake as claimed in one or more of the preceding claims 1 to 6, **characterized in that** the feed travel of the brake lining (6) obtainable over the profiles (14, 15) does not exceed the size of the lifting clearance of the disk brake.

## Revendications

1. Frein à disque, de préférence un frein à disque commandé moyennant de l'air comprimé pour des véhicules utilitaires, comprenant
- un étrier de frein (1) chevauchant un disque de frein,
- des garnitures de frein (6, 7) disposées des deux côtés dudit disque de frein (2) et fixées aux plaques de support de garnitures (4, 5),
- un levier du frein (20) logé sur des rouleaux,
- un dispositif de serrage de frein (8) monté latéralement dudit disque de frein (2),
- qui est pourvu d'au moins deux pistons-chasse (11, 12) transversaux relativement audit disque de frein (2) et guidés dans un point (13),
- dont les faces affectées à ladite plaque de support de garniture (4) en face se trouvant en contact avec la dernière,
**caractérisé en ce que**
- lesdites faces desdits pistons-chasse (11, 12) et au moins les aires de contact de ladite plaque de support de garniture (4) en face sont pourvues des formations profilées s'engrenant l'une dans l'autre de façon positive d'une telle manière,
- que chaque garniture de frein (6) soit déplaçable en sens périphérique au moins au cas d'un serrage de frein à pleine charge.

2. Frein à disque selon la revendication 1, **caractérisé en ce que** lesdites formations profilées (14, 15) de ladite plaque de support de garniture (4) et desdits deux pistons-chasse (11, 12) sont apte à être mise en prise l'un dans l'autre sans jeu et défini par voie géométrique.

3. Frein à disque selon la revendication 1 ou 2, **caractérisé en ce que** lesdites formations profilées (14, 15) de ladite plaque de support de garniture et desdits pistons-chasse (11, 12) consistent en rainures et barrettes s'y engrenant, qui sont disposés en alternance continue l'un relativement à l'autre.

4. Frein à disque selon la revendication 3, **caractérisé en ce que** lesdites rainures et barrettes desdites formations profilées (14, 15) présentent une configuration triangulaire dans leurs coupes transversales.

5. Frein à disque selon la revendication 3 ou 4, **caractérisé en ce que** l'angle de direction en biais ou respectivement de rampe se trouve à un angle entre 15 et 40° relativement à l'aire de ladite plaque de support de garniture (4), qui présente lesdites formations profilées.

6. Frein à disque selon la revendication 5, **caractérisé en ce que** le coefficient de friction de ladite garniture de frein (6) est dans la gamme de 0,375, et **en ce que** l'angle de direction en biais ou respectivement de rampe desdites formations profilées (14, 15) se trouvent à un angle entre 20 et 30° relativement à l'aire de ladite plaque de support de garniture (4), qui présente lesdites formations profilées.

7. Frein à disque selon une quelconque ou plusieurs des revendications précédentes 1 à 6, **caractérisé en ce que** la course d'approche de ladite garniture de frein (6), qui est achevable via lesdites formations profilées (14, 15), ne dépasse pas la valeur du jeu d'aération du frein à disque.
